# EUROPEAN PATENT APPLICATION

(11) **EP 4 116 390 A2**
(43) Date of publication of application: **11.01.2023**
(21) Application number: 22173188.8
(22) Date of filing: 13.05.2022
(51) Int. Cl.: C09K 3/18, A23B 4/09

(54) **ANTIFREEZE AQUEOUS COMPOSITION FOR PLANT SPECIES**

(30) Priority: 14.05.2021 IT 202100012470
(71) Applicant: Icas srl, 20131 Milano (MI) (IT)
(72) Inventor: MIGLIO, GIOVANNI, 40051 MALALBERGO (BO) (IT)
(74) Representative: Giuliano, Natalia

(57) **Abstract**

An antifreeze aqueous composition for plant species comprising at least one polyethylene glycol which molecular weight is comprised between 350 and 1000 Dalton wherein molar concentration of polyethylene glycol in the composition is comprised in the range 0.1-1 M.

A method (200) for treatment of plant species by using an antifreeze aqueous composition comprising the following steps:
- Providing said aqueous composition (201);
- Spraying and/or depositing said aqueous composition (202) at the aerial parts of plant species, in amount comprised in the range 100-3000 liter for hectare.

## Description

The present invention is related to an antifreeze aqueous composition for plant species.

In particular, the present invention is related to an antifreeze aqueous composition for cultivated or spontaneous plant species.

The antifreeze aqueous composition could be used for example for treatment of plant species in a field or a greenhouse.

Plants can be arboreal, shrubby or herbaceous, horticultural or ornamental, spontaneous or cultivated plants.

Preferably the plants can be arboreal plants or shrub plants, preferably grown in open fields.
As it is known, in recent years, scientific and technological development in the horticulture sector has been oriented towards the development of techniques and/or products to prevent damage to plant species caused by sudden changes in the climate, in particular damage caused by thermal drops (frosts).

In the state of the art, to prevent or treat the effects of frosts, methods have been implemented mostly of physical nature.

A first physical method consists in arranging, inside the orchards, special kerosene stoves (or other fuel) intended to be ignited in anticipation of thermal drops. The limits of this method are evident both for obvious logistical and economic reasons, and for the emission of fumes and other pollutants into the environment, so much so that the use of this system is severely limited.

A second physical method consists in spraying the plants with nebulized water immediately before lowering
thermal. The phase transition of water into ice in fact determines the release of energy in the form of heat.

However, this method can lead to very modest recoveries, in the order of 1-1.5 ° C. In addition, water supply systems require fixed structures, completely incompatible with short-cycle crops and with the alternation of different crops on the same land.

A third known method, based on the use of chemicals, consists in the distribution of products with an anti-stress effect, having a certain ability to overcome the damage caused by frost to the plants. It is known in this sense the use of plant hormones falling into the categories of Auxins and Gibberellins is known.

However, these substances, in addition to having a very limited effect, according to the legislation of many countries fall within the group of pesticides, with all the related negative effects.

Also falling within said third physical method, based on the use of chemical substances, there are known compositions with an antifreeze effect to be distributed on plant species, having a certain ability to prevent and/or overcome the damage caused by frost to the plants. It is known in such a sense a composition for the protection of tea trees from damage caused by ambient temperatures below 0° C. The protective composition includes a plurality of chemical compounds: polylactic acid, polyethylene glycol having a molecular weight in the 2000-4000 Dalton range, cellulose, mineral oil, glucose, sucrose, paclobutrazol, glycerol, emulsifier, citric acid and water.

However, this composition does not guarantee satisfactory results in terms of effectiveness in preventing damage caused by frost; this is attributable, among the various causes, to the molecular weight range of the polyethylene glycol.

Furthermore, paclobutrazol, according to the legislation of many countries (including the European Union), falls within the group of pesticides, with the consequent prohibition of its use in commercial compositions.

Also known are compositions in the healthcare sector comprising polyethylene glycol.

In particular, a liquid composition for the exclusive use in the preservation of contact lenses is known from US20200009044A1, in which said polyethylene glycol has a molecular weight of 400 Dalton and is present in the composition according to a concentration of 0.001 M. In detail, the Polyethylene glycol has the technical effect of increasing the viscosity of the tear liquid and for the preservation of contact lenses.
Another known composition in the healthcare sector is represented by a semi-solid composition for exclusive use as a toothpaste, described in document WO2015/172345A1, in which said polyethylene glycol has a molecular weight of 300 Dalton and is present in the composition according to a concentration of 0.006 M. In detail, the polyethylene glycol has the technical effect of stabilizing the aromatic component of said dentifrice composition.

Scope of the present invention is to provide an antifreeze aqueous composition for plant species which guarantees protection only in the event of thermal drops and in a wider range of temperatures than those normally implemented, which is highly effective and simple to apply and which provides for the use of non-toxic or even prohibited products.

Furthermore, the scope of the present invention is to provide a method for the treatment of plant species by using said antifreeze aqueous composition.

According to the present invention, an antifreeze aqueous composition for plant species is realized, as defined in claim 1.

For a better understanding of the present invention, reference is now made to the present description, purely by way of non-limiting example.

The antifreeze aqueous composition for plant species comprises at least one polyethylene glycol having a molecular weight between 350 Da and 1000 Da (Dalton), in which the molar concentration of polyethylene glycol in the composition is in the range 0.1-1 M.

These characteristics derive from the experimental tests carried out by the Applicant (reported below), in which the use of at least one polyethylene glycol having a molecular weight between 350 Da and 1000 Da (Dalton), in which the molar concentration of polyethylene glycol in the composition is comprised in the 0.1-1 M range, it has shown optimal effectiveness in preventing damage caused by lowering temperatures (frost); this totally unexpected and unpredictable technical advantage is due precisely to the range of molecular weight and concentration of the polyethylene glycol, which is different from the range of molecular weight and concentration of polyethylene glycols used in known antifreeze aqueous compositions.

In addition, polyethylene glycol can be used in horticulture without toxicological and regulatory implications.

According to a further aspect of the invention, the antifreeze aqueous composition for plant species comprises at least one polyethylene glycol having a molecular weight higher than 300 Da (Dalton).

This characteristic derives from the experimental tests carried out by the Applicant (listed below), in which the use of at least one polyethylene glycol with a molecular weight greater than 300 Da has shown optimal effectiveness in preventing damage caused by thermal lowering (frost).

According to a further aspect of the invention, the antifreeze aqueous composition for plant species has molar concentrations in polyethylene glycol in the range 0.01-1 M.

According to a preferred embodiment, the antifreeze aqueous composition for plant species has molar concentrations in polyethylene glycol in the range 0.1-1 M.

This characteristic derives from the experimental tests carried out by the Applicant (reported below), in which the use of said molar composition in polyethylene glycol comprised in the range 0.01-1 M has shown the best compromise between prevention of damage caused by thermal lowering (frost) and use of polyethylene glycol (and therefore, economic savings).

According to a further aspect of the invention, the antifreeze aqueous composition for plant species comprises at least two polyethylene glycols whose respective molecular weights have a molecular weight difference of less than or equal to 25%.

This characteristic derives from the experimental tests carried out by the Applicant (reported below), in which the use of said aqueous composition comprising at least two polyethylene glycols whose respective molecular weights have a molecular weight difference of less than or equal to 25% has shown an unexpected synergistic effect resulting in optimal effectiveness in preventing damage caused by lowering temperatures (frost).

In particular, as will be evident from the experimental tests carried out by the Applicant reported below, the aqueous composition comprising polyethylene glycol having a molecular weight of 350 Da and polyethylene glycol having a molecular weight of 400 Da achieves a high level of effectiveness in the prevention of damage from thermal lowering, significantly higher than the level of the sum of the efficacies of the individual polyethylene glycols.

Furthermore, as will be evident from the experimental tests carried out by the Applicant reported below, the aqueous composition comprising polyethylene glycol having a molecular weight of 400 Da and polyethylene glycol having a molecular weight of 500 Da achieves a high level of effectiveness in preventing damage from thermal lowering, significantly higher than the level of the sum of the efficacies of the individual polyethylene glycols. According to a further aspect of the invention, the antifreeze aqueous composition for plant species further comprises at least one additive, preferably belonging to the group of food additives, selected from the group consisting of: dyes, such as, by way of non-limiting example, the extract of turmeric for the yellow color, cochineal extract (E120) for the red color, bright blue FCF (E133) for the blue color, copper sulphate with or without chlorophyll (E141) for the green color; olfactory tracers such as lemon or lavender extract as an indication and not limited to; plasticizers such as triacetin (E1518) or trimethyl acetate; washout reducing agents such as shellac (E904); surfactants such as lecithins (E322).

These additives confer improving properties to the antifreeze aqueous composition, such as, for example, better adhesive capacity on the treated plant species (reducing washout agents, plasticizing agents), longer duration or otherwise called shelf life, nutritional properties towards plant species.

According to a preferred embodiment of the invention, said composition comprises:
- At least one polyethylene glycol, as previously specified, in a concentration in the range 0.05-5% by volume of composition;
- At least one additive, as specified above, in a concentration in the range 0.01-0.1% by volume of composition.

This characteristic derives from the experimental tests carried out by the Applicant, in which the use of said aqueous composition with the concentrations of polyethylene glycol and additive indicated above has shown the best compromise between the prevention of damage caused by thermal lowering (frost), positive effects on the nutrition and health of the plant species treated and quantity used of polyethylene glycol and additive (and therefore, economic savings).

According to a further aspect of the invention, method 200 for the treatment of plant species by using an antifreeze aqueous composition for plant species as specified above, comprises the following steps:
- Providing said aqueous composition;
- Spray and / or deposit said aqueous composition in correspondence with the aerial portions of the plant species, according to quantities in the range of 100-3000 liters per hectare of surface.
This method 200 derives from the experimental tests carried out by the Applicant, in which the use of said aqueous composition with the quantities reported above has shown the best compromise between the prevention of damage caused by the lowering of temperatures (frost) and the quantity of composition used (and therefore, economic saving).

According to this method, the aqueous composition can be sprayed or deposited on the aerial part of the plant species using equipment normally used in the agricultural sector for localized treatment with active ingredients, such as atomizers, motor pumps, backpack pumps, overhead distribution means.

The aerial part of the plant species can be chosen from stem, leaves, buds, flowers or fruits.

According to a further aspect of the invention, the method for treating plant species by using an antifreeze aqueous composition for plant species as specified above, comprises the following steps:
- Providing said aqueous composition;
- Provide an irrigation system for the root portions of plant species;
- Deposit and/or convey said aqueous composition in correspondence with the irrigation system, according to molar concentrations in the range 0.01-1 M.

This method 200 derives from the experimental tests carried out by the Applicant, in which the use of said aqueous composition with the concentrations indicated above has shown the best compromise between the prevention of damage caused by the lowering of temperatures (frost) and the quantity of composition used (and therefore, economic saving).

According to this method, the aqueous composition can be administered to the plant species by root or mixed with normal irrigation water and at the concentrations indicated above.

The aqueous composition of the present invention can be prepared using water with any degree of purity, including mains water and water normally used for irrigation of cultivated land. The polyethylene glycol and optionally the at least one further additive can be added to the water at room temperature and pressure, under stirring, using equipment per se known in the sector and therefore not further described here.

Furthermore, said aqueous composition can be marketed in a ready-to-use form, or in a form in which the at least one polyethylene glycol and, optionally, the at least one additive have a concentration as reported above.

Alternatively, and preferably, the aqueous composition can be marketed in concentrated form, to be diluted at the time of use to the concentrations as defined above. Depending on the severity of the expected thermal drops and in consideration of the low danger for man and the environment, advantageously, the aqueous composition of the present invention can be used repeatedly whenever necessary, with preventive applications to be carried out between 6 hours and 72 hours before the onset of temperature drops, generally obtainable from weather forecasts.

In support of what is indicated, as anticipated, the Applicant has carried out a series of experimental tests that demonstrate the effectiveness of said composition and said method 200 of treatment in the prevention of frost damage on plant species.

### Experimental test 1)

Young tomato plants particularly sensitive to cold and with identical dimensions and characteristics, in the number of 200 for each thesis, were subjected to spraying with 0.075 M equimolar solutions of polyethylene glycol with molecular weights of 200, 400 and 1000 Dalton. They were then placed in the refrigerator, where a three-hour freeze at -3 ° C was simulated. 24 hours after the end of the event, the count of live and dead plants was carried out. The percentage effectiveness was calculated by placing the untreated witness equal to zero and evaluating the increase in the treated theses.

In all the findings, including those relating to the subsequent tests, numbers followed by the same letters indicate values that are not statistically different from each other for P = 0.05 in the Duncan test.
The results are shown in table 1 below:

**Table 1**

| Product | Molar conc. | Solution conc. | % alive plants | % efficacy |
|---|---|---|---|---|
| Witness water | 0 | - | 3,33 a | 0 |
| PEG200 | 0,075 M | 0,15 % | 20,27 abc | 20,96 |
| PEG400 | 0,075 M | 0,30 % | 40,83 bc | 42,22 |
| PEG1000 | 0,075 M | 0,75 % | 22,82 abc | 23,59 |

As can be seen from table 1, the higher percentage of efficacy was found to be for the aqueous composition having polyethylene glycol with a molecular weight equal to 400 Dalton. Furthermore, the efficacy percentage of the aqueous composition comprising polyethylene glycol with molecular weight equal to 200 Dalton was found to be lower than that relating to the aqueous composition comprising polyethylene glycol with molecular weight equal to 1000 Dalton.

### Experimental test 2)

With materials and methods identical to experimental test 1, young tomato plants were subjected to spraying with aqueous compositions comprising polyethylene glycol having molecular weights of 200, 400 and 1000 Dalton and with the same mass, i.e. with identical concentration in the sprayed aqueous solutions. The results, obtained with detection 24 hours after extraction from the cold room, are shown in Table 2 below:

**Table 2**

| **Product** | **Molar Conc.** | **Solution conc.** | **% alive plants** | **% efficacy** |
|---|---|---|---|---|
| Witness water | 0 | 0 % | 3,33 a | 0 |
| PEG200 | 0,075 M | 0,15 % | 20,27 abc | 20,96 |
| PEG400 | 0,0375 M | 0,15 % | 51,50 bc | 53,25 |
| PEG1000 | 0,0150 M | 0,15 % | 27,12 abc | 24,6 |

As can be seen from table 2, the higher percentage of efficacy was found to be for the aqueous composition comprising polyethylene glycol with a molecular weight equal to 400 Dalton. Furthermore, the efficacy percentage of the aqueous composition comprising polyethylene glycol with molecular weight equal to 200 Dalton was found to be lower than that relating to the aqueous composition comprising polyethylene glycol with molecular weight equal to 1000 Dalton.

### Experimental test 3)

With materials and methods identical to experimental test 2, young tomato plants were subjected to spraying with aqueous compositions comprising polyethylene glycol with a molecular weight of 400 Dalton and at two different concentrations. However, the spraying took place 96 hours (four days) before the thermal drop, instead of 24 hours, to allow for the evaluation of the duration of the effect due to the treatment.

The results are shown in table 3 below:

**Table 3**

| **Product** | **Molar conc.** | **Solution conc.** | **% alive plants** | **% efficacy** |
|---|---|---|---|---|
| Witness water | 0 | 0 % | 0 a | 0 |
| PEG400 | 0,0375 M | 0,15 % | 32,5 b | 32,5 |
| PEG400 | 0,075 M | 0,3 % | 37,0 b | 37,0 |

As can be seen from table 3, the higher percentage of efficacy was found to be for the aqueous composition comprising polyethylene glycol with a molecular weight equal to 400 Dalton and higher concentration, compared to the percentage of efficacy for the aqueous composition comprising polyethylene glycol with a molecular weight equal to 400 Dalton and lower concentration.

### Experimental test 4)

In a further experimental test, apple tree branches about 70 cm long, in the so-called "flower buds visible" phase, i.e. swollen buds before the natural flowering, in number of four for each thesis (1 branch = 1 repetition) were cut and placed in jars containing aqueous compositions comprising polyethylene glycol of different molecular weights (as shown by table 4 below). Subsequently, the branches were left to bloom and then subjected to a lowering of temperature lasting one hour at -3 ° C; 24 hours after removal from the cold room, the effectiveness of the treatments was assessed on the basis of the flowers believed to be dead (> 70% of the surface of the withered petals).

**Table 4**

| **Thesis** | **PEG Solution (weight Da)** | **Molar Conc.** | **% dead flowers** | **% efficacy** |
|---|---|---|---|---|
| 01 WITNESS | - | - | 68c | 0 |
| 02 | PEG350 | 0,08 M | 33b | 51,4 |
| 03 | PEG400 | 0,08 M | 32b | 52,9 |
| 04 | PEG500 | 0,08 M | 31ab | 54,4 |
| 05 | PEG350 + PEG400 | 0,04 M + 0,04 M | 19a | 72,05 |
| 06 | PEG400 + PEG500 | 0,04 M + 0,04 M | 18a | 73,5 |
| 07 | PEG2000 | 0,08 M | 55b | 19,1 |
| 08 | PEG4000 | 0,08 M | 57bc | 16,1 |

In Table 4 shown above, the numbers followed by different letters differ statistically from each other by P = 0.05 on the Duncan test.

The reported results show a good efficacy of the compositions under examination, highlighting in theses 05 and 06 an unexpected and particularly significant synergistic effect by combining polyethylene glycol compositions having different molecular weight, in a narrow range of ± 25% compared to that of the thesis median with polyethylene glycol having a molecular weight equal to 400 Dalton.

The data shown highlights in particular the following characteristics:
- Greater percentages of efficacy for aqueous compositions comprising polyethylene glycols having molecular weights between 350 Da and 1000 Dalton (this technical advantage, completely unexpected and unpredictable, is due precisely to the range of molecular weight and concentration of polyethylene glycol, which is different from the molecular weight and concentration range of polyethylene glycols used in known antifreeze aqueous compositions);
- Synergistic effect of aqueous compositions comprising polyethylene glycols with different molecular weights, comprised in a narrow range of molecular weights.

Finally, it is clear that modifications and variations may be made to the antifreeze aqueous composition for plant species and its method of use described and illustrated here without work around the scope of the present invention, as defined in the attached claims.

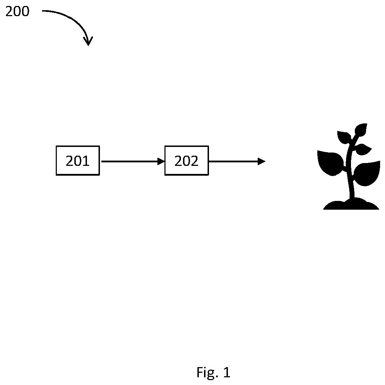

## Claims

1. Antifreeze aqueous composition for plant species comprising at least one polyethylene glycol which molecular weight is comprised between 350 and 1000 Dalton wherein molar concentration of polyethylene glycol in the composition is comprised in the range 0.1-1 M.

2. Composition according to claim 1, wherein the composition comprises at least two polyethylene glycols which respective molecular weights differ in a percentage lower than, or equal to, 25%.

3. Composition according to claim 2, wherein the composition comprises polyethylene glycol which molecular weight is equal to 350 Da and polyethylene glycol which molecular weight is equal to 400 Da.

4. Composition according to claim 2, wherein the composition comprises polyethylene glycol which molecular weight is equal to 400 Da and polyethylene glycol which molecular weight is equal to 500 Da.

5. Composition according to one or more of the preceding claims, wherein the composition comprises further at least one additive selected from the group consisting of: colorants, olfactory tracers, plasticizers, washout reducing agents, surfactants.

6. Composition according to claim 5, wherein the composition comprises:
- At least one polyethylene glycol which concentration in composition volume is comprised in the range 0.05-5%;
- At least one additive which concentration in composition volume is comprised in the range 0.01-0.1%.

7. Method (200) for treatment of plant species by using an antifreeze aqueous composition according to one or more of the preceding claims, the method comprising the following steps:
- Providing said aqueous composition (201);
- Spraying and/or depositing said aqueous composition (202) at the aerial parts of plant species, in amount comprised in the range 100-3000 liter for hectare.

8. Method (200) for treatment of plant species by using an antifreeze aqueous composition according to one or more of the claims 1-7, the method (200) comprising the following steps:
- Providing said aqueous composition;
- Providing an irrigation system for the root parts of plant species;
- Depositing and/or conveying said aqueous composition at the irrigation system, in molar concentration comprised in the range 0.01-1 M.
